# EUROPEAN PATENT APPLICATION

(11) **EP 4 817 700 A2**
(43) Date of publication of application: **07.10.2026**
(21) Application number: 26199932.0
(22) Date of filing: 15.07.2024
(51) Int. Cl.: A63B 26/00

(54) **FIXING SET**

(30) Priority: 12.10.2023 CN 202311326313; 21.12.2023 CN 202323493137 U; 22.12.2023 CN 202323528681 U; 09.01.2024 CN 202420048001 U; 19.03.2024 CN 202420539540 U; 26.04.2024 CN 202420890130 U; 05.06.2024 CN 202421277069 U; 06.06.2024 CN 202421292866 U
(62) Document number(s) of the earlier application(s) in accordance with Art. 76 EPC: 24806704.3 / 4 714 509
(71) Applicant: Beyond Power Inc., Shenzhen, Guangdong 518114 (CN)
(72) Inventor: ZHOU, Changxing, Shenzhen, 518114 (CN); HUANG, Sirong, Shenzhen, 518114 (CN); CHEN, Juncheng, Shenzhen, 518114 (CN); PAN, Hongtao, Shenzhen, 518114 (CN); ZUO, Qianbin, Shenzhen, 518114 (CN); LIANG, Junjie, Shenzhen, 518114 (CN); CAI, Xing, Shenzhen, 518114 (CN); LAN, Qiu, Shenzhen, 518114 (CN); HE, Jinheng, Shenzhen, 518114 (CN); CHANG, Wenxin, Shenzhen, 518114 (CN)
(74) Representative: De Arpe Tejero, Manuel

(57) **Abstract**

A fixing member is provided. The fixing member includes a first seat (e10), a second seat (e20), and a first coupling seat (11). The first seat (e10) is provided with a second coupling seat (12). The second seat (e20) is rotatably connected to the first seat (e10). The first coupling seat (11) is provided on the second seat (e20).

## Description

### TECHNICAL FIELD

The present disclosure relates to the technical field of fitness device accessories, and in particular, to a fixing member.

### BACKGROUND

When a fitness device is in use, a user interacts with the fitness device, utilizing the power of the fitness device or overcoming the resistance of the fitness device to perform exercise. In the related art, the fitness device usually needs to be fixed. The fixation of the device in the related art is relatively rigid, requiring a base to be provided for the fitness device, or the fitness device to be fixed on a dedicated gantry.

However, any mounting method can only accommodate a single mounting scenario or a limited number of mounting scenarios. For example, the installation of a gantry can be performed only within a frame of the gantry and cannot be performed away from the gantry. The installation expansion of the fitness device is limited and does not meet the increasingly diverse fitness needs of users.

### SUMMARY OF THE INVENTION

The present disclosure provides a fixing member that can adapt to increasingly diverse fitness needs of users.

A fixing member according to an embodiment of the present disclosure includes a first seat, a second seat, and a first coupling seat. The first seat is provided with a second coupling seat. The second seat is rotatably connected to the first seat. The first coupling seat is provided on the second seat.

Additional aspects and advantages of the present disclosure will be partly given in the following description, and will partly become apparent from the following description, or will be learned through the practice of the present disclosure.

### BRIEF DESCRIPTION OF THE DRAWINGS

The above and/or additional aspects and advantages of the present disclosure will become apparent and easily understood from the description of the embodiments in conjunction with the following accompanying drawings.
FIG. 1 is a perspective structural view of a fixing member according to an embodiment of the present disclosure.
FIG. 2 is a perspective structural view of another fixing member according to an embodiment of the present disclosure.
FIG. 3 is a perspective structural view of yet another fixing member according to an embodiment of the present disclosure.
FIG. 4 is an exploded structural view of the fixing member in FIG. 1.
FIG. 5 is an exploded structural view of the fixing member in FIG. 3.
FIG. 6 is a sectional schematic diagram of a pin shaft and a locking disc.
FIG. 7 is a perspective structural view of a cam wrench according to an embodiment of the present disclosure.
FIG. 8 is a schematic diagram of a second coupling seat.
FIG. 9 is a sectional structural view of a second coupling seat.
FIG. 10 is a schematic structural diagram of the interaction between a latching member and a hook.
FIG. 11 is a schematic diagram of a first locking part and a second locking part according to an embodiment.
FIG. 12 is another schematic diagram of a first locking part and a second locking part according to an embodiment.
FIG. 13 is a schematic diagram of a first locking part and a second locking part according to yet another embodiment.
FIG. 14 is another schematic diagram of a first locking part and a second locking part according to yet another embodiment.

### DETAILED DESCRIPTION OF EMBODIMENTS

Embodiments of the present disclosure are described in detail below, and examples of the embodiments are shown in accompanying drawings, wherein the same or similar reference numerals represent the same or similar elements or elements having the same or similar functions. The embodiments described below with reference to the accompanying drawings are illustrative and are intended to explain the present disclosure and should not be construed as limiting the present disclosure.

In the description of the present disclosure, it should be understood that terms such as "center", "longitudinal", "transverse/lateral", "length", "width", "thickness", "up", "down", "front", "back", "left", "right", "vertical", "horizontal", "top", "bottom", "inner", "outer", "clockwise", "counterclockwise", etc., indicate orientations or positional relationships based on orientations or positional relationships shown in the accompanying drawings. These terms are used only for the convenience of describing the present disclosure and simplifying the description, and are not intended to indicate or imply that an apparatus or an element must have a specific orientation, be constructed and operated in a specific orientation, and therefore should not be construed as limiting the present disclosure. Additionally, terms such as "first" and "second" are used for descriptive purposes only and should not be construed as indicating or implying relative importance or implicitly indicating the number of technical features. Thus, features defined by "first" and "second" may explicitly or implicitly include one or more of the features. In the description of the present disclosure, the term "plurality of" means two or more, unless otherwise clearly and specifically defined.

In the description of the present disclosure, it should be noted that unless otherwise defined explicitly and specifically, terms such as "mount", "couple", "connect" should be understood broadly. For example, they may be a fixed connection, a detachable connection, or an integral connection; or may be a mechanical connection, an electrical connection, or mutual communication; or may be a direct connection or an indirect connection through an intermediate media, or may be an internal connection of two elements or an interaction relationship between two elements. For those having ordinary skill in the art, specific meanings of the foregoing terms in the present disclosure may be understood according to specific situations.

In the present disclosure, unless otherwise defined explicitly and specifically, a first feature being "above" or "below" a second feature may include the first feature and the second feature being in direct contact, or may include the first and second features not being in direct contact but being in contact through an additional feature between them. Moreover, a first feature being "above", "upward", and "on" a second feature may include the first feature being directly above and obliquely above the second feature, or may only indicate that the first feature has a higher horizontal height than the second feature. A first feature being "below", "beneath" and "underneath" the second feature includes the first feature being directly below and obliquely below the second feature, or only indicates that the first feature has a smaller horizontal height than the second feature.

The following disclosure provides many different embodiments or examples to implement different structures of the present disclosure. To simplify the disclosure of the present disclosure, components and arrangements of specific embodiments are described below. Of course, these are only examples and are not intended to limit the present disclosure. Additionally, the present disclosure may repeat reference numerals and/or reference letters in different embodiments for the purpose of simplicity and clarity, which does not indicate a relationship between the various embodiments and/or arrangements discussed. Furthermore, the present disclosure provides embodiments of various specific processes and materials, but those having ordinary skill in the art may be aware of the application of other processes and/or the use of other materials.

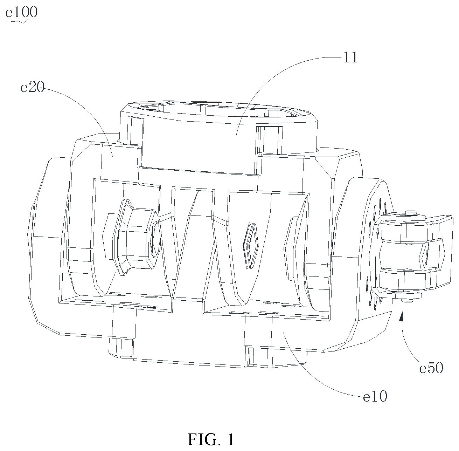

The present disclosure discloses a fixing member. The fixing member includes an angle changing fixing member or an angle adjusting fixing member, which are collectively referred to as a rotating fixing member e100 hereinafter. Referring to FIGS. 1-3, in an embodiment of the present disclosure, the rotating fixing member e100 includes a first seat e10, a second seat e20, and a first coupling seat 11. The first seat e10 is provided with a second coupling seat 12. The second seat e20 is rotatably connected to the first seat e10. The first coupling seat 11 is provided on the second seat e20 for quickly connecting or disconnecting with the fitness device, massage device, or other fixing members.

In the rotating fixing member e100 of an embodiment of the present disclosure, the rotating fixing member e100 as a whole can be fixed at a suitable position by the first seat e10, the second seat e20 can be rotatably connected to the first seat e10, and the first coupling seat 11 is provided on the second seat e20. Then, when the fitness device is installed on the first coupling seat 11, the angle can be adjusted by rotating the second seat e20 relative to the first seat e10, so as to meet the user's needs for different fitness postures during fitness and improve the user's fitness experience.

Specifically, the entire structure of the rotating fixing member e100 can be made of a rigid material to have better toughness, so that the fitness device can be more stable during installation and use. The first seat e10 can be in a circular or rectangular shape, and the first seat e10 is mainly configured for bearing and fixing. The second seat e20 is rotatably mounted on the first seat e10, and the first coupling seat 11 is secured to the second seat e20. Preferably, the first coupling seat 11 can be mounted on a side of the second seat e20 opposite to the first seat e10. The fitness device is detachably installed on the first coupling seat 11.

That is to say, the second seat e20 can adjust an angle orientation relative to the first seat e10. When the second seat e20 rotates relative to the first seat e10, the first coupling seat 11 can rotate along with the rotation of the second seat e20, and then the fitness device installed on the first coupling seat 11 can also rotate along with the first coupling seat 11, so as to achieve the purpose of adjusting the angle orientation. Therefore, the user can better adjust the orientation of the fitness device according to different fitness postures during use.

At the same time, the user can also connect the rotating fixing member e100 in series with other fixing members to adjust the angle of the fixing set at a specific position. For example, two rotating fixing members e100 can be coupled at 90 degrees to each other. At this time, the unused first coupling seat 11 and second coupling seat 12 after coupling can rotate on a spherical surface. For another example, the rotating fixing member e100 can also be provided on a bottom plate fixing member, and then the fitness device is fixed on the bottom plate fixing member. At this time, the fitness device can rotate relative to the bottom plate fixing member to adapt to the user's fitness movements.

Referring to FIGS. 1-5, in some embodiments, first connecting ribs e11 are respectively provided on two sides of a coupling surface of the first seat e10 or the second seat e20, or a first connecting groove e12 is provided in the middle of a connecting surface of the first seat e10 or the second seat e20.

Rotating shaft holes e13 are provided on two sides of the first connecting rib e11 or the first connecting groove e12 for rotatably connecting the second seat e20 and the first seat e10.

Thus, the first seat e10 and the second seat e20 can be connected via the first connecting rib e11 or the first connecting groove e12. The first connecting rib e11 or the first connecting groove e12 can provide an avoidance space for the rotation of the first seat e10 and the second seat e20, so that the first seat e10 and the second seat e20 can have a larger rotation angle, increase the adjustable angle of the fitness device, and improve the user's fitness experience.

Specifically, the coupling surface of the first seat e10 can be understood as a surface of the first seat e10 facing the second seat e20, and the coupling surface of the second seat e20 can be understood as a surface of the second seat e20 facing the first seat e10. The first connecting rib e11 can be understood as a protrusion extending from two sides of one connecting surface to the other opposite connecting surface, and corresponding rotating shaft holes e13 are provided on the opposite surfaces of the two first connecting ribs e11. Similarly, the first connecting groove e12 can be understood as a groove extending from the connecting surface to the other connecting surface in an opposite direction, and corresponding rotating shaft holes e13 are oppositely provided on two sides of the first connecting groove e12.

In an embodiment, first connecting ribs e11 may be provided on the two sides of the coupling surface of the first seat e10, or a first connecting groove e12 may be provided on the coupling surface of the first seat e10. The second seat e20 can be mounted between the two first connecting ribs e11 or in the first connecting groove e12 through the cooperation of a rotating shaft and a rotating shaft hole e13, so that the first seat e10 and the second seat e20 can be rotatably connected.

In another embodiment, first connecting ribs e11 may be provided on the two sides of the coupling surface of the second seat e20, or a first connecting groove e12 may be provided on the coupling surface side of the second seat e20. The first seat e10 can be mounted in the two first connecting ribs e11 or the first connecting groove e12 through the cooperation of a rotating shaft and a rotating shaft hole e13, so that the first seat e10 and the second seat e20 can be rotatably connected.

Referring to FIGS. 1-5, in some embodiments, second connecting ribs e21 are respectively provided on two sides of the coupling surface of the second seat e20 or the first seat e10, or a second connecting groove e22 is provided in the middle of the coupling surface of the second seat e20 or the first seat e10.

Rotating shaft holes e13 are provided on the two sides of the second connecting rib e21 or the second connecting groove e22, which are configured to cooperate with the rotating shaft holes e13 of the first connecting rib e11 or the first connecting groove e12 to rotatably connect the second seat e20 and the first seat e10.

Thus, the first seat e10 can be connected through the first connecting rib e11 or the first connecting groove e12 and the second connecting rib e21 or the second connecting groove e22 on the second seat e20. Both the first seat e10 and the second seat e20 are provided with ribs or grooves, which can provide a larger avoidance space for the rotation of the first seat e10 and the second seat e20, so that the first seat e10 and the second seat e20 can have a larger rotation angle, increase the adjustable angle of the fitness device, and improve the user's fitness experience.

Specifically, the second connecting rib e21 has the same structure as the first connecting rib e11, and the second connecting groove e22 has the same structure as the first connecting groove e12. That is to say, when the first seat e10 is provided with the first connecting rib e11 or the first connecting groove e12, the second seat e20 may be provided with the second connecting rib e21 or the second connecting groove e22 at the same time. The two sides of the second connecting rib e21 and the second connecting groove e22 are oppositely provided with a rotating shaft hole e13 or a rotating shaft that matches the rotating shaft hole e13 on the first connecting rib e11 or the first connecting groove e12.

It can be understood that the two sides of the coupling surface of the first seat e10 may be provided with first connecting ribs e11 or the coupling surface may be provided with a first connecting groove e12. The two sides of the coupling surface of the second seat e20 may be provided with second connecting ribs e21 or the coupling surface may be provided with a second connecting groove e22. The first seat e10 can be rotatably connected through the cooperation between the first connecting rib e11 or the first connecting groove e12 and the second connecting rib e21 or the second connecting groove e22 on the second seat e20. Thus, there is a large space between the first seat e10 and the second seat e20 to avoid each other, so that the second seat e20 has a larger adjustment angle.

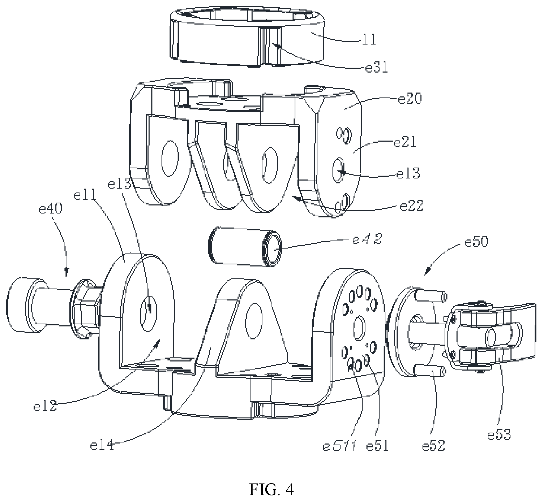

Referring to FIG. 1 and FIG. 4, in some embodiments, the first seat e10 and the second seat e20 are further rotatably connected in the middle via a revolute pair e42 to enhance the connection stability between the first seat e10 and the second seat e20. Exemplarily, a reinforcing rib e14 is provided between the first seat e10 and the second seat e20, and a rotating shaft hole e13 of the reinforcing rib e14 is coaxial with a rotating shaft hole e13 of the first connecting rib e11 or the first connecting groove e12.

Thus, the reinforcing rib e14 can improve the stability of the rotational connection between the first seat e10 and the second seat e20.

Specifically, the reinforcing rib e14 may have the same structure as the first connecting rib e11 or the second connecting rib e21. The reinforcing rib e14 can be disposed between the two first connecting ribs e11 or second connecting ribs e21 of the first seat e10 or the second seat e20. A rotation center coaxial with the rotating shaft holes e13 on both sides is formed on the reinforcing rib e14. Therefore, after connection, the reinforcing rib e14 strengthens the connection stability between the first seat e10 and the second seat e20 without affecting the rotation of the two.

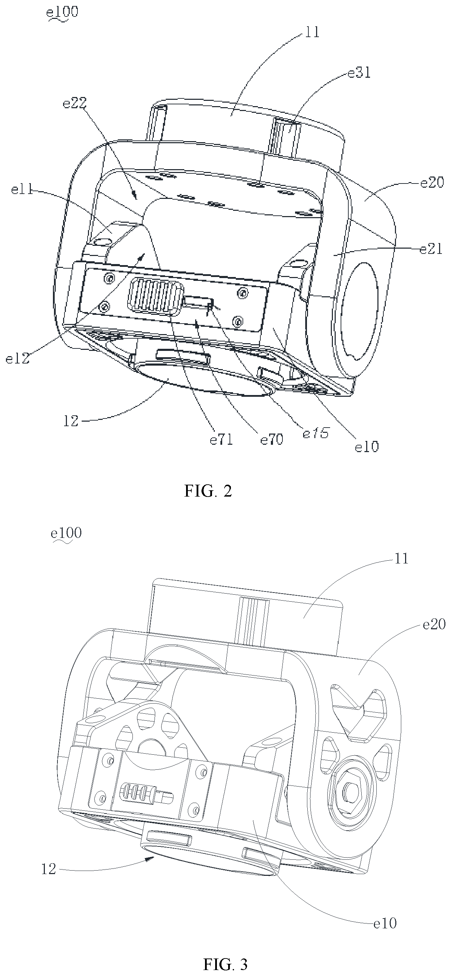

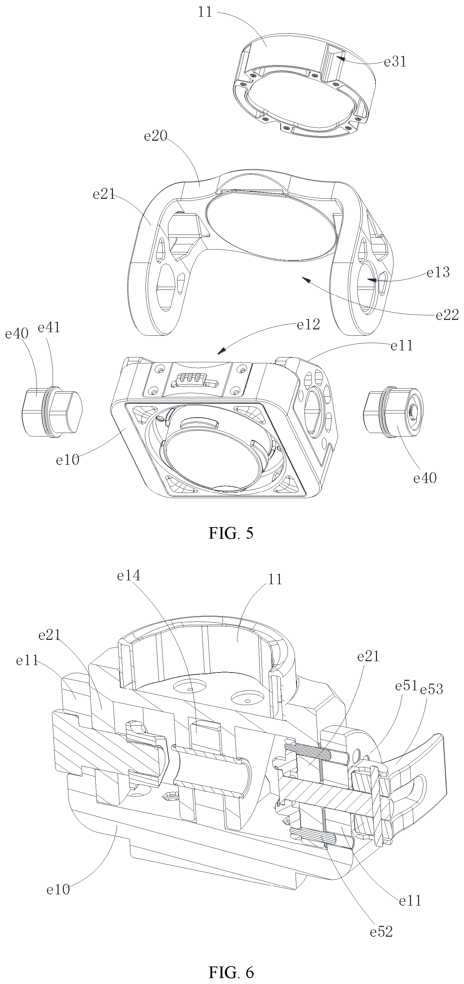

Referring to FIG. 3 and FIG. 5, in some embodiments, the first seat e10 and the second seat e20 are rotatably connected via a damping rotating shaft e40.

Thus, the first seat e10 and the second seat e20 are connected via the damping rotating shaft e40 to increase the rotational friction force between the two, preventing the two from rotating easily and affecting the stability of the fitness device during use.

Specifically, the damping rotating shaft e40 can be mounted in the rotating shaft hole e13 where the first seat e10 and the second seat e20 are rotationally matched. When the first seat e10 and the second seat e20 rotate, the damping rotating shaft e40 can provide a certain resistance, thereby preventing the two from rotating arbitrarily and affecting the use of the fitness device.

As shown in FIG. 5, in some embodiments, the damping rotating shaft e40 includes a damping sheet e41. The damping sheet e41 is fixed to one of the second seat e20 and the first seat e10 in a rotation direction and is in frictional contact with the other; or
there are two damping sheets e41, which are respectively fixed to the first seat e10 or the second seat e20 in a rotation direction, and the two damping sheets e41 are in frictional contact with each other.

Thus, the damping sheets e41 are configured to increase the rotational friction force between the first seat e10 and the second seat e20, preventing the two from rotating easily and affecting the stability of the fitness device during use.

Specifically, the damping sheet e41 can rotate synchronously with one of the first seat e10 and the second seat e20 and rub against the other to generate resistance, or the damping sheet e41 can be disposed around a rotating shaft where the first seat e10 and the second seat e20 are rotatably connected and is located between the positions where the two are in rotational contact. The first seat e10 and the second seat e20 generate resistance by friction between the two damping sheets e41, and the damping sheets e41 can play a role in increasing the rotational friction force between the first seat e10 and the second seat e20. When the second seat e20 rotates relative to the first seat e10, the damping sheet e41 can increase the rotational resistance, preventing the second seat e20 from rotating arbitrarily relative to the first seat e10.

Referring to FIG. 1 and FIG. 4, in some embodiments, an angle locking assembly e50 is provided between the first seat e10 and the second seat e20 for locking or unlocking their relative rotation angle. Thus, when the first seat e10 and the second seat e20 are adjusted to a suitable angle, a current angle can be locked by the angle locking assembly e50, preventing the fitness device from rotating during use and affecting the fitness experience.

Referring to FIG. 4 and FIG. 6, in some embodiments, the angle locking assembly e50 includes a locking disc e51 and a pin shaft e52. The locking disc e51 and the pin shaft e52 are respectively fixed to the first seat e10 and the second seat e20 in the rotation direction. A plurality of locking holes e511 are distributed on the locking disc e51 along the rotation direction for the pin shaft e52 to be inserted.

Thus, when the first seat e10 and the second seat e20 need to be locked, the pin shaft e52 is inserted into the locking hole e511 on the locking disc e51 to lock the two and improve the locking stability.

Specifically, one of the locking disc e51 and the pin shaft e52 is provided on the first seat e10, and the other is provided on the second seat e20, and the locking disc e51 and the pin shaft e52 are arranged opposite to each other. A plurality of locking holes e511 are opened on the locking disc e51, and the plurality of locking holes e511 are arranged at intervals along a circumferential direction of the locking disc e51. The pin shaft e52 can be configured as a cylindrical structure and adapted to the locking hole e511, and the number of pin shafts e52 can be one, two or more, and when the pin shaft e52 is extended or retracted, the pin shaft e52 can cooperate with the locking hole e511, which is not limited in the present disclosure.

It can be understood that the locking disc e51 can be provided on the rotational contact surface between the first seat e10 and the second seat e20, and the pin shaft e52 can be movably and telescopically provided on the first seat e10 to be able to be extended or retracted relative to the locking disc e51. When the pin shaft e52 withdraws from the locking hole e511 of the locking disc e51, the second seat e20 is in an unlocked state relative to the first seat e10, and the two can rotate relative to each other. When the pin shaft e52 extends into the locking hole e511 of the locking disc e51, the second seat e20 is in a locked state relative to the first seat e10, and the two are locked relative to each other and cannot rotate.

Referring to FIG. 4, FIG. 6, and FIG. 7, in some embodiments, the angle locking assembly e50 further includes a cam wrench e53. The cam wrench e53 is connected to the pin shaft e52 and is configured to drive the pin shaft e52 to extend or retract along its axial direction and achieve frictional locking. Thus, the arrangement of the cam wrench e53 enables the pin shaft e52 to cooperate with the locking disc e51 more conveniently, thereby facilitating the extension or retraction of the pin shaft e52 in the locking hole e511.

Specifically, the cam wrench e53 can be connected and matched with the pin shaft e52 and can rotate relative to the pin shaft e52. Furthermore, the cam wrench e53 includes a cam portion and a handle e71, and a protrusion is provided on one side relative to a rotation center of the cam portion.

In an embodiment, when the cam portion rotates toward the pin shaft e52, the cam portion squeezes the first seat e10 to bring the pin shaft e52 into the locking hole e511, which is a locked state. When the handle e71 is rotated so that the cam portion is not facing the pin shaft e52, the pin shaft e52 can withdraw from the locking hole e511, which is an unlocked state.

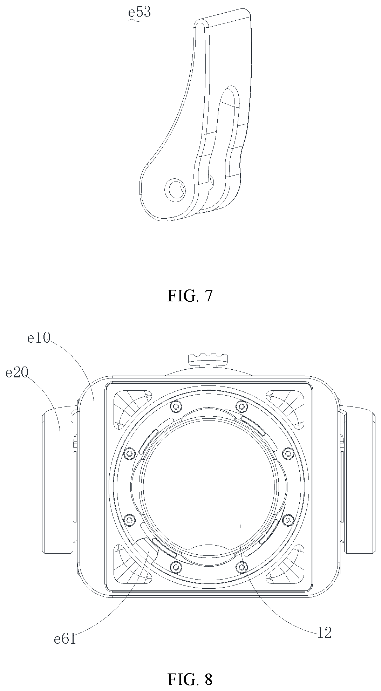

Referring to FIG. 3 and FIG. 8, in some embodiments, the first seat e10 is further provided with a second coupling seat 12. The second coupling seat 12 can be coupled to the first coupling seat 11 for connecting with the outside or another rotating fixing member e100.

Thus, the first seat e10 can be mounted via the second coupling seat 12 at a position provided with the first coupling seat 11, improving the convenience and flexibility of fixing the first seat e10. Exemplarily, when two rotating fixing members e100 are connected, the second coupling seat 12 of one rotating fixing member e100 can be coupled to the first coupling seat 11 of another rotating fixing member e100. If the swing angle needs to be increased, the rotation axes of the two rotating fixing members e100 can be made parallel to each other. If two degrees of freedom are required to enable the combined rotating fixing member e100 to perform spherical omnidirectional swing, the rotation axes of the two rotating fixing members e100 can be perpendicular to each other. At the same time, a plurality of rotating fixing members e100 can also be connected end to end in sequence, or one or more other rotating fixing members e100 can be connected through the first coupling seat 11 and/or the second coupling seat 12.

Specifically, the second coupling seat 12 may be provided on a side of the first seat e10 opposite to the second seat e20. The second coupling seat 12 and the first coupling seat 11 can form a matching combined structure. The first seat e10 equipped with the second coupling seat 12 can be easily and conveniently mounted at any position provided with the first coupling seat 11.

In an embodiment, the first coupling seat 11 may be an annular structure, and the second coupling seat 12 may be an annular groove structure, and the two structures match each other. When the second coupling seat 12 is assembled onto the first coupling seat 11, the annular structure of the first coupling seat 11 extends into an annular groove of the second coupling seat 12. Of course, the first coupling seat 11 and the second coupling seat 12 can also be of other shapes and structures that match each other, which is not limited in the present disclosure.

Furthermore, the rotating fixing member e100 provided with the second coupling seat 12 can be mounted on another rotating fixing member e100 provided with the first coupling seat 11. The two rotating fixing members e100 are connected horizontally and vertically, and the fitness device is installed on the first coupling seat 11. Thus, the fitness device can have movable angles in both horizontal and vertical directions, improving the fitness experience.

Referring to FIG. 3, FIG.8 and FIG. 9, in some embodiments, the second coupling seat 12 is provided with a hook e61 and a first elastic member e62. The hook e61 is configured to snap-fit onto the first coupling seat 11, and the first elastic member e62 applies an elastic force to the hook e61 for snap-fitting the hook e61 onto the first coupling seat 11.

Thus, the second coupling seat 12 can apply an elastic force on the hook e61 via the first elastic member e62, so that the hook e61 can stably snap-fit onto the first coupling seat 11, improving the stability between the second coupling seat 12 and the first coupling seat 11.

Specifically, the hook e61 may be provided at an edge of the second coupling seat 12. When the second coupling seat 12 is assembled with the first coupling seat 11, the hook e61 may snap-fit onto an edge of the first coupling seat 11. Correspondingly, a hook groove e31 adapted to the hook e61 can be opened at the edge of the first coupling seat 11, and two sides of the hook groove e31 may be a gentle slope-like structure.

When the second coupling seat 12 is assembled onto the first coupling seat 11, the hook e61 snap-fits into the hook groove e31 to prevent the second coupling seat 12 and the first coupling seat 11 from being separated. When the first coupling seat 11 and the second coupling seat 12 need to be separated, a certain rotational force is applied to the second coupling seat 12, the hook e61 can slide out from a gentle slope of the hook groove e31, and then be pulled outward to separate the second coupling seat 12 from the first coupling seat 11.

One end of the first elastic member e62 is fixed to the second coupling seat 12, and the other end is connected to an end of the hook e61, so as to apply an elastic force on the hook e61 so that the hook e61 and the first coupling seat 11 are more stably connected.

Referring to FIG. 2, FIG. 9, and FIG. 10, in some embodiments, the rotating fixing member e100 further includes a latching member e70 movably disposed on the first seat e10. The latching member e70 includes a first state in which the latching member limits the rotation angle of the hook e61 when the hook e61 is snapped, and a second state in which the latching member does not interfere with the hook e61 to allow the hook e61 to rotate freely.

Thus, when the hook e61 snap-fits onto the first coupling seat 11, the latching member e70 can limit the movement of the hook e61 to prevent the second coupling seat 12 from rotating or detaching from the first coupling seat 11.

Specifically, when the latching member e70 is in the first state, the latching member e70 can limit the movement of the hook e61, that is, the hook e61 is locked. Then, when the second coupling seat 12 is rotated, the hook e61 cannot slide out of the hook groove e31, so that the second coupling seat 12 cannot be separated from the first coupling seat 11, thereby improving the safety of the fitness device during use.

When the latching member e70 is in the second state, the hook e61 is not limited by the latching member e70. Then, when the second coupling seat 12 is rotated, the hook e61 can slide out of the hook groove e31, and the second coupling seat 12 can be separated from the first coupling seat 11.

Furthermore, the latching member e70 may be an annular disk-like structure and be rotatably mounted on the first seat e10. A protrusion is provided at a position on one side of the latching member e70 corresponding to the hook e61. When the hook e61 corresponds to the top of a slope of the protrusion, the protrusion can limit the movement of the hook e61, that is, the latching member e70 is in the first state, and the hook e61 is in the locked state. When the hook e61 corresponds to the bottom of the slope of the protrusion, the hook e61 can have a certain movement space, that is, the latching member e70 is in the second state, and the hook e61 is in the unlocked state, as shown in the figure.

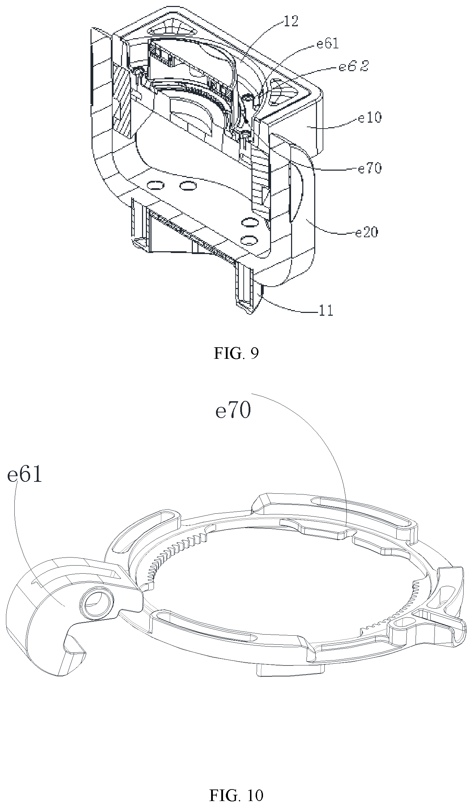

Referring to FIG. 2 and FIG. 10, in some embodiments, the latching member e70 is driven by a handle e71, and the first seat e10 is provided with a channel e15 for the handle e71 to extend out and move. Thus, the user can drive the latching member e70 via the handle e71 to facilitate locking or unlocking between the latching member e70 and the hook e61.

Specifically, the latching member e70 can extend from the first seat e10 through the channel e15 on the first seat e10, and the handle e71 is mounted at an end of the latching member e70 extending from the first seat e10. When the latching member e70 needs to be locked or unlocked, the latching member e70 can be driven by the handle e71, which is more convenient for the user to lock or unlock.

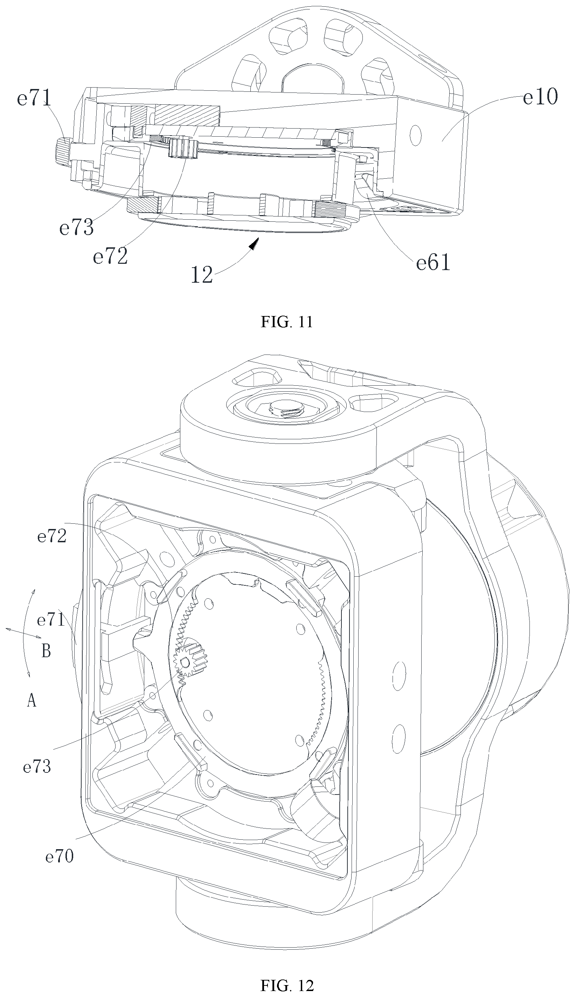

Referring to FIG. 3 and FIG. 11, in some embodiments, a first locking part e72 is provided on the latching member e70 or the handle e71, and a second locking part e73 is provided in the first seat e10. The first locking part e72 and the second locking part e73 engage each other to lock in a first direction when in contact.

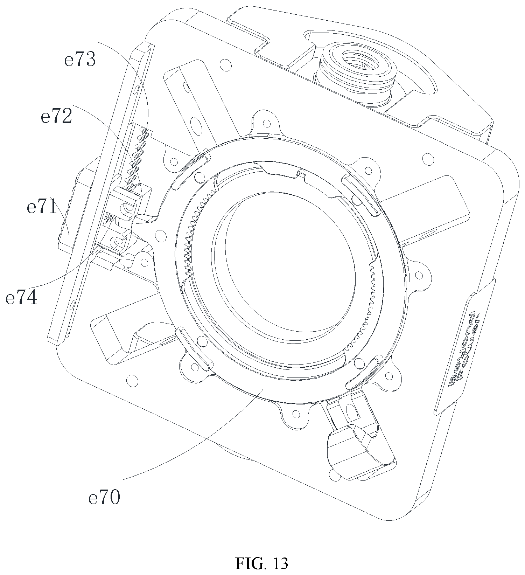

The rotating fixing member e100 also includes a second elastic member e74 (see FIG. 13), which acts on the latching member e70, the handle e71, the first locking part e72 or the second locking part e73, and is configured to apply an elastic force to make the first locking part e72 and the second locking part e73 contact.

The handle e71 is movably disposed in the channel e15, which can move along the first direction and an opposite direction to drive the latching member e70, and can move along the second direction to make the first locking part e72 come into contact with, or separate from, the second locking part e73.

Thus, when the first locking part e72 and the second locking part e73 are in contact and locked under the elastic force of the second elastic member e74, the second coupling seat 12 and the first coupling seat 11 can be stably locked. When the user overcomes the elastic force of the second elastic member e74 to separate the first locking part e72 and the second locking part e73, the second coupling seat 12 and the first coupling seat 11 can be separated.

Specifically, as shown in FIGS. 10 to 12, the second locking part e73 may be a toothlike structure, movably disposed in the first seat e10, and linked with the handle e71. The first locking part e72 may be an arc-shaped rack-like structure, connected to the latching member e70. The handle e71 can drive the latching member e70 to rotate along the first direction (direction A in the figure), and can press the first locking part e72 to separate from the second locking part e73 along a second direction (direction B in the figure).

A tooth portion of the second locking part e73 can contact with a tooth portion of the first locking part e72 under the elastic force of the second elastic member e74, and then the two can snap-fit to limit the rotation of the latching member e70, thereby making it impossible to separate the second coupling seat 12 and the first coupling seat 11 connected to each other via the hook e61.

When the handle e71 is pressed to overcome the elastic force of the second elastic member e74 to separate the tooth portion of the second locking part e73 and the tooth portion of the first locking part e72, the handle e71 can drive the latching member e70 to rotate. At this time, the hook e61 can slide out of the hook groove e31 to achieve the purpose of unlocking.

As shown in FIG. 10, FIG. 13, and FIG. 14, the second locking part e73 is a tooth-shaped structure and is connected to the handle e71. The first locking part e72 is a rack structure and is fixed to the first seat e10. The second elastic member e74 acts on the handle e71. When the handle e71 is toggled in the first direction (direction A in the figure), the handle e71 can drive the latching member e70 to rotate. When the handle e71 is pressed in the second direction (direction B in the figure), the second locking part is separated from the first locking part.

Of course, the specific structures of the first locking part e72 and the second locking part e73 in embodiments of the present disclosure are only two of the possible structures, and the present disclosure does not limit the specific structures of the first locking part e72 and the second locking part e73.

In some embodiments, the first locking part e72 and the second locking part e73 are locked to each other in a one-way locking manner along a first direction.

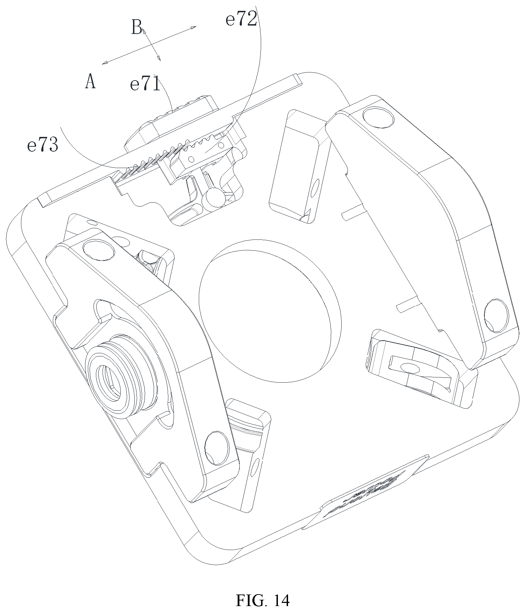

That is, the user does not need to press the handle e71 when locking, and only needs to press the handle e71 when unlocking. Exemplarily, the second locking part e73 in FIG. 11 and FIG. 12 is a one-way rotating gear. When the user toggles the handle to lock along the first direction, the first locking part e72 and the second locking part e73 do not lock in the locking direction, and the gear rotates on the rack; after locking is completed, the two lock each other in the opposite direction. Exemplarily, the tooth-shaped structure in FIG. 13 and FIG. 14 is a reverse hook tooth structure. That is, when the user toggles the handle to lock along the first direction, the two will not lock, and after locking is completed, the two will lock in the opposite direction.

An embodiment of the present disclosure also discloses a fitness assembly, and the fitness assembly includes a fitness device and a rotating fixing member e100 in any of the above embodiments. The fitness device is provided with a second coupling seat 12 corresponding to the first coupling seat 11, and a body of the fitness device is connected to at least one rotating fixing member e100.

In the fitness assembly of the embodiment of the present disclosure, the body of the fitness device is installed on the rotating fixing member e100 with adjustable angle, which can better meet the training needs of the user during fitness. Through different angle changes of the body of the fitness device, the body of the fitness device can adapt to more fitness postures and enhance the user's fitness experience.

In the description of this specification, reference to terms such as "an embodiment", "some embodiments", "exemplary embodiments", "example", "specific example", or "some examples" means that specific features, structures, materials, or characteristics described in conjunction with the embodiment or example are included in at least one embodiment or example of the present disclosure. In this specification, the schematic expressions of the above terms do not necessarily refer to the same embodiment or example. Moreover, the specific features, structures, materials, or characteristics described may be combined in any suitable manner in any one or more embodiments or examples.

Although the embodiments of the present disclosure have been shown and described, those having ordinary skill in the art will appreciate that various changes, modifications, substitutions, and variations may be made to the embodiments without departing from the principles and intent of the present disclosure, and the scope of the present disclosure is defined by the claims and their equivalents.

## Claims

1. A fixing member, comprising:
a first seat (e10) provided with a second coupling seat (12);
a second seat (e20) rotatably connected to the first seat (e10);
a first coupling seat (11) provided on the second seat (e20).

2. The fixing member according to claim 1, wherein first connecting ribs (e11) are respectively provided on two sides of a coupling surface of the first seat (e10) or the second seat (e20); or
a first connecting groove (e12) is provided in the middle of a connecting surface of the first seat (e10) or the second seat (e20), and rotating shaft holes (e13) are provided on two sides of the first connecting rib (e11) or the first connecting groove (e12) for rotatably connecting the second seat (e20) and the first seat (e10).

3. The fixing member according to claim 2, wherein second connecting ribs (e21) are respectively provided on two sides of the coupling surface of the second seat (e20) or the first seat (e10); or
a second connecting groove (e22) is provided in the middle of the coupling surface of the second seat (e20) or the first seat (e10);
wherein rotating shaft holes (e13) are provided on two sides of the second connecting rib (e21) or the second connecting groove (e22), which are configured to cooperate with the rotating shaft holes (e13) of the first connecting rib (e11) or the first connecting groove (e12) to rotatably connect the second seat (e20) and the first seat (e10).

4. The fixing member according to claim 2, wherein the first seat (e10) and the second seat (e20) are further rotatably connected in the middle via a revolute pair (e42), and a rotating shaft of the revolute pair (e42) is coaxial with the rotating shaft hole (e13) of the first connecting rib (e11) or the first connecting groove (e12).

5. The fixing member according to claim 1, wherein the first seat (e10) and the second seat (e20) are rotatably connected via a damping rotating shaft (e40).

6. The fixing member according to claim 5, wherein the damping rotating shaft (e40) comprises a damping sheet (e41), wherein the damping sheet (e41) is fixed to one of the second seat (e20) or the first seat (e10) in a rotation direction and is in frictional contact with the other; or
there are two damping sheets (e41), wherein the two damping sheets (e41) are respectively fixed to the first seat (e10) or the second seat (e20) in a rotation direction, and the two damping sheets (e41) are in frictional contact with each other.

7. The fixing member according to claim 1, wherein an angle locking apparatus (e50) is arranged between the first seat (e10) and the second seat (e20) for locking or unlocking the relative rotation angle between them.

8. The fixing member according to claim 7, wherein the angle locking apparatus (e50) comprises a locking disc (e51) and a pin shaft (e52), the locking disc (e51) and the pin shaft (e52) are respectively fixed to the first seat (e10) and the second seat (e20) in the rotation direction, and a plurality of locking holes (e511) are distributed on the locking disc (e51) along the rotation direction for the pin shaft (e52) to be inserted.

9. The fixing member according to claim 8, wherein the angle locking apparatus (e50) further comprises a cam wrench (e53), wherein the cam wrench (e53) is connected to the pin shaft (e52) and is configured to drive the pin shaft (e52) to extend or retract along its axial direction and achieve frictional locking.

10. The fixing member according to claim 1, wherein the second coupling seat (12) is configured to couple with an external first coupling seat (11), and the first seat (e10) is configured to be mounted via the second coupling seat (12) at a position provided with the external first coupling seat (11); the fixing member further comprises:
a hook (e61) and a first elastic member (e62), wherein the hook (e61) is configured to snap-fit onto the external first coupling seat (11), and the first elastic member (e62) is configured to apply an elastic force to the hook (e61) for snap-fitting onto the external first coupling seat (11);
a latching member (e70) movably disposed on the first seat (e10), wherein the latching member (e70) comprises a first state and a second state; wherein in the first state the latching member (e70) limits a rotation angle of the hook (e61) when the hook (e61) is snapped, and the hook (e61) is in a locked state; wherein in the second state the latching member (e70) does not interfere with the hook (e61) to allow the hook (e61) to rotate freely, and the hook (e61) is in an unlocked state;
a handle (e71), wherein the handle (e71) is configured to move along a first direction and an opposite direction to drive the latching member (e70), to enable locking or unlocking between the latching member (e70) and the hook (e61); and
a first locking part (e72) and a second locking part (e73), wherein the first locking part (e72) is disposed on the handle (e71) or the latching member (e70); wherein the handle (e71) is further configured to move along a second direction to cause the first locking part (e72) to come into contact with, or separate from the second locking part (e73); wherein the first locking part (e72) and the second locking part (e73) engage each other to lock in the first direction and the opposite direction when in contact, or engage each other to lock in the opposite direction when in contact.

11. The fixing member according to claim 10, wherein the first seat (e10) is provided with a channel (e15) for the handle (e71) to extend out and move, and the handle (e71) is movably disposed in the channel (e15).

12. The fixing member according to claim 10, further comprising a second elastic member (e74), which acts on the latching member (e70), the handle (e71), the first locking part (e72) or the second locking part (e73), and is configured to apply an elastic force to make the first locking part (e72) and the second locking part (e73) contact.

13. The fixing member according to claim 12, wherein the second locking part (e73) is a tooth-shaped structure, movably disposed in the first seat (e10), and linked with the handle (e71); wherein the first locking part (e72) is an arc-shaped rack-like structure, and is connected to the latching member (e70); wherein a tooth portion of the second locking part (e73) is configured to contact with a tooth portion of the first locking part (e72) under the elastic force of the second elastic member (e74), and the first locking part (e72) and the second locking part (e73) are configured to snap-fit to limit rotation of the latching member (e70); wherein when the handle (e71) is pressed, the handle (e71) presses the first locking part (e72) along the second direction to overcome the elastic force of the second elastic member (e74) and separate the tooth portion of the second locking part (e73) from the tooth portion of the first locking part (e72); or
wherein the second locking part (e73) is a tooth-shaped structure and is connected to the handle (e71), and the first locking part (e72) is a rack structure and is fixed to the first seat (e10); wherein the second elastic member (e74) acts on the handle (e71); wherein when the handle (e71) is pressed along the second direction, the second locking part (e73) separates from the first locking part (e72).

14. The fixing member according to claim 13, wherein the first locking part (e72) and the second locking part (e73) are locked in a one-way locking manner along the opposite direction;
wherein the second locking part (e73) is the tooth-shaped structure, movably disposed in the first seat (e10), and linked with the handle (e71); wherein the first locking part (e72) is the arc-shaped rack-like structure, connected to the latching member (e70), and the second locking part (e73) is a one-way rotating gear; or
wherein the second locking part (e73) is the tooth-shaped structure and is connected to the handle (e71), the first locking part (e72) is the rack structure and is fixed to the first seat (e10), and the tooth-shaped structure is a reverse hook tooth structure.

15. The fixing member according to claim 10, wherein the latching member (e70) is an annular disk-like structure, and is rotatably mounted on the first seat (e10); wherein a protrusion is provided at a position on one side of the latching member (e70) corresponding to the hook (e61);
wherein when the hook (e61) corresponds to a top of a slope of the protrusion, the protrusion limits movement of the hook (e61), and the latching member (e70) is in the first state; and
wherein when the hook (e61) corresponds to a bottom of the slope of the protrusion, the hook (e61) has a movement space, and the latching member (e70) is in the second state.
